# EUROPEAN PATENT SPECIFICATION

(11) **EP 1 871 203 B1**
(45) Date of publication and mention of the grant of the patent: **08.10.2008**
(21) Application number: 06744527.0
(22) Date of filing: 20.04.2006
(51) Int. Cl.: A47J 36/20, A47J 27/04, A47J 36/04

(54) **STEAM COOKING VESSEL**
DAMPFKOCHTOPF
PANIER POUR CUISSON VAPEUR

(30) Priority: 20.04.2005 IT MI20050703
(43) Date of publication of application: 02.01.2008
(73) Proprietor: Pavoni Italia S.p.a., 24040 Suisio (BG) (IT)
(72) Inventor: RAINERI, Paolo, I-24100 Bergamo (IT)
(74) Representative: Premru, Rok
(86) International application number: PCT/IB2006/000943
(87) International publication number: WO 2006/111838

(56) References cited:
- EP-A- 0 526 141
- EP-A- 0 992 195
- EP-A- 1 598 401
- SU-A1- 1 796 139
- US-A- 4 649 898
- US-A1- 2004 249 059

## Description

This invention relates to a steam cooking vessel.

For steam cooking of food, it is known to use steam cooking vessels able to be held in pans or pots.

The food held in the vessel is cooked by the heat transmitted by steam generated by a boiling liquid, typically water, on the bottom of the pot.

Prior art steam cooking vessels are made of metal, plastic or other inflexible materials.

They generally have the shape of a spherical bowl or a portion of a cylinder, and a perforated bottom to allow the passage of steam.

The base of the vessel may further have a plurality of support feet, which allow it to be raised a few centimeters from the pot bottom, and not to come in contact with the boiling liquid but only with the steam released therefrom.

Alternatively, the side surface of the basket may have suitable hooks to be hung on the pot rim.

However, prior art steam cooking vessels have various drawbacks.

Particularly, these vessels are rigid and poorly adaptable to various operating conditions.

They further have a large size when not in use and when stored in their cupboards.

Also, the handles of stainless steel vessels tend to heat up during cooking, and may cause the user to be burnt thereby.

EP-B-0 526 141 discloses a vegetable steamer which has a perforated base and a number of interleaved perforated leaves. The streamer can be made from synthetic plastics material. SU 1 796 61 39 also discloses a steamer which can be made of plastics material.

The object of this invention is to obviate at least some of prior art drawbacks and particularly the drawbacks set out hereinbefore.

This object is achieved by a vessel according to the features of claim 1, and by use of an elastomer according to the features of claim 9.

Further advantages may be achieved by the additional features of the dependent claims.

A possible embodiment of the vessel, as claimed in the attached claims, will be described hereafter with reference to the accompanying drawings, in which:

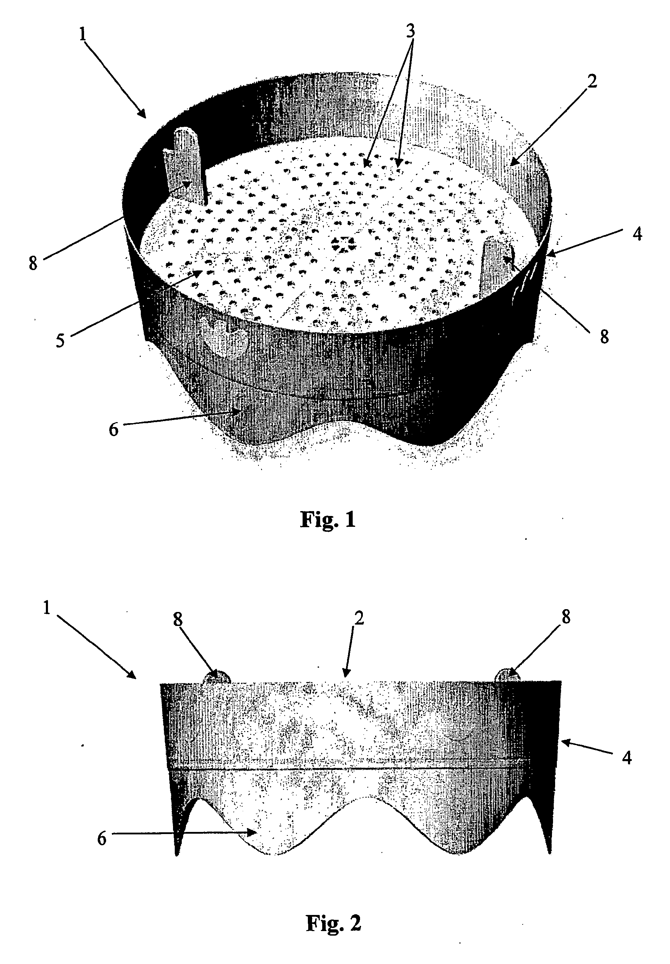

- Figure 1 is a top perspective view of the vessel;
- Fig. 2 is a side view of the vessel;
- Figure 3 is a bottom perspective view of the vessel;
- Fig. 4 is a side view of multiple vessels.

Referring to the drawings, numeral 1 generally designates a vessel which comprises a container 2 with a bottom 5 having a plurality of through holes 3 and support means 6.

In prior art, the vessel is placed in the pot, resting on its support means 6, so that its perforated bottom 5 is raised from the base of the pot.

The steam released from the boiling liquid in the pot passes through the holes 3 of the bottom 5, thereby cooking the food in the container 2.

The main feature of this patent is that the vessel 1 is wholly made of a flexible material, a flexible material being intended herein as a material that can recover important strains (50% minimum) with a hardness of 20 to 90 Shore A.

The materials used are silicone elastomers.

Silicone rubbers are not only suitable for their mechanical flexibility properties but also for their ability to maintain their mechanical properties in a wide range of temperatures (approximately -40°C to +250°C) and for their low heat conductivity.

Products made of this material are fabricated by molding a liquid or solid silicone elastomer-based mixture, followed by a cross-linking process, to provide the product with adequate elastic properties.

The silicone elastomer used for making the vessel 1 is preferably obtained using platinum as a catalyst in the cross-linking process.

The cross-linking process is carried out by adding appropriate catalysts to the elastomer mixture.

Platinum is a particularly advantageous catalyst, as it is non-toxic and prevents the generation of offensive smells.

Therefore, this catalyst is particularly suitable for products designed to come in direct contact with food.

Typically, the cross-linking process may occur at a temperature of 150°C to 200°C for 30 to 300 seconds.

Use of different materials for making the vessel 1 gives this product a higher versatility of use.

Furthermore, the vessel 1 turns to a considerably smaller size when it is not used and stored in its cupboard.

The lower thermal conductivity of silicone elastomers, compared to metal materials, reduces burning risks.

The vessel made of the above materials may be further manufactured at a low manufacturing cost and in a wide range of colors.

Furthermore, the vessel made of flexible material is easily washable and is dishwasher safe.

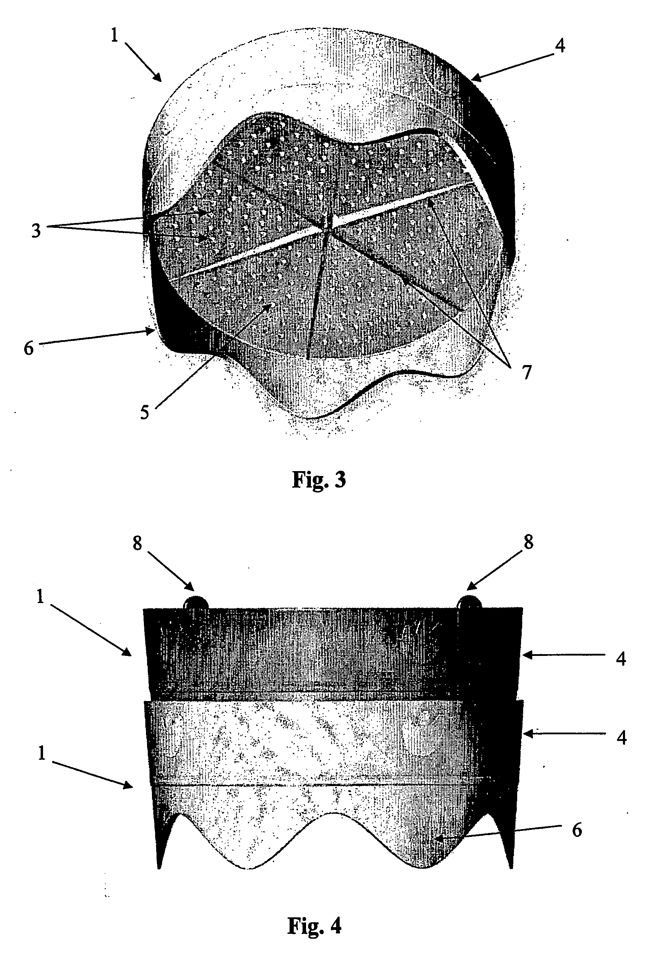

The vessel 1 preferably has interconnection means to allow a plurality of vessels 1 to be joined together in a stacked arrangement, as shown in Figure 4.

This feature allows stack cooking of various dishes using the steam released from a single pot.

This provides considerable energy savings compared to individual dish cooking.

The interconnection means include the support means 6 and the inner upper portion of the container 2.

The support means 6 may have such conformation and size as to allow them to be held within the container 2.

The side surface 4 of the container 2 preferably has a frustoconical shape.

The support means 6 may further consist of a wavy ring, itself having a frustoconical shape.

This geometrical feature improves the stability of the stacked vessels 1, and reduces the risk of collapse.

The perforated bottom 5 preferably has radial reinforcement means 7, as shown in Figure 3.

The reinforcement means 7 provide better support of the bottom 5, which is loaded with the weight of the food to be cooked.

The bottom 5 may have a conical shape and the reinforcement means may have a decreasing section from the center to the side wall 4 of the bottom 5.

The vessel 1 may further have two or more handles 8 for holding the vessel.

The handles 8 are preferably located within the container 2.

This feature allows to use the vessel in pots with side surfaces of various heights, and facilitates the insertion and removal of the vessel in and from the pots.

Furthermore, when a stacked arrangement is used, the handles do not hinder the positioning of the top vessel.

## Claims

1. Steam cooking vessel (1) which comprises a container (2) having a perforated bottom (5) to allow the passage of steam and support means (6), wholly made of a flexible material having a hardness of 20 to 90 Shore A **characterized in that** said material is a silicone elastomer.

2. Steam cooking vessel as claimed in claim 1, **characterized in that** said silicone elastomers is obtained by a platinum-catalyzed cross-linking process.

3. Steam cooking vessel as claimed in claim 1 or 2, **characterized in that** it has interconnecting means for allowing stack formation.

4. Steam cooking vessel as claimed in any one of the preceding claims, **characterized in that** said support means (6) are in the form of a wavy ring.

5. Steam cooking vessel as claimed in claim 4, **characterized in that** said container (2) has a side surface (4), said side surface (4) and said ring of said support means (6) having a frustoconical shape.

6. Steam cooking vessel as claimed in any one of the preceding claims, **characterized in that** said bottom (5) of said container (2) has radial reinforcement means (7).

7. Steam cooking vessel as claimed in any one of the preceding claims, **characterized in that** said bottom (5) has two handles (8).

8. Steam cooking vessel as claimed in claim 7, **characterized in that** said handles (8) are within the container (2).

9. Use of a silicone elastomer having an hardness of 20 to 90 Shore A to make a steam cooking vessel according to claim 1.

10. Use of an elastomer as claimed in claim 9, **characterized in that** said silicone elastomer is obtained by a platinum-catalyzed cross-linking process.

## Patentansprüche

1. Dampfkochtopf (1), welcher einen Behälter (2), der einen den Durchtritt von Dampf erlaubenden perforierten Boden (5) hat, und Haltemittel (6) umfasst, völlig bestehend aus flexiblem Material, das eine Härte von 20 bis 90 Shore A aufweist, **dadurch gekennzeichnet, dass** das genannte Material ein Silikon-Elastomer ist.

2. Dampfkochtopf (1) nach Anspruch 1, **dadurch gekennzeichnet, dass** das Silikon-Elastomer durch einen platin-katalytischen Vernetzungsprozess erhalten wird.

3. Dampfkochtopf (1) nach Anspruch 1 oder 2, **dadurch gekennzeichnet, dass** er Verbindungsmittel zum Ermöglichen einer gestapelten Anordnung aufweist.

4. Dampfkochtopf (1) nach einem der vorherigen Ansprüche, **dadurch gekennzeichnet, dass** die Haltemittel (6) die Form eines welligen Rings aufweisen.

5. Dampfkochtopf (1) nach Anspruch 4, **dadurch gekennzeichnet, dass** der genannte Behälter (2) eine Seitenfläche (4) aufweist, welche Seitenfläche (4) und welcher Ring des genannten Haltemittels (6) eine kegelstumpfförmige Form aufweisen.

6. Dampfkochtopf (1) nach einem der vorherigen Ansprüche, **dadurch gekennzeichnet, dass** der genannte Boden (5) des genannten Behälters (2) radiale Verstärkungsmittel (7) aufweist.

7. Dampfkochtopf (1) nach einem der vorherigen Ansprüche, **dadurch gekennzeichnet, dass** der genannte Boden (5) zwei Griffe (8) aufweist.

8. Dampfkochtopf (1) nach Anspruch 7, **dadurch gekennzeichnet, dass** die Griffe (8) innerhalb des Behälters (2) angeordnet sind.

9. Verwendung eines Silikon-Elastomers, das eine Härte von 20 bis 90 Shore A aufweist, um einen Dampfkochtopf (1) nach Anspruch 1 herzustellen.

10. Verwendung eines Elastomers nach Anspruch 9, **dadurch gekennzeichnet, dass** das genannte Silikon-Elastomer durch einen platin-katalytischen Vernetzungsprozess erhalten wird.

## Revendications

1. Panier pour cuisson vapeur (1) comportant un conteneur (2) avec un fond perforé (5) permettant le passage de vapeur et des moyens de support (6) entièrement faite en un matériau flexible ayant une dureté de 20 à 90 shore A, **caractérisé en ce que** ledit matériau est un élastomère silicone.

2. Panier pour cuisson vapeur selon la revendication 1, **caractérisé en ce que** ledit élastomère silicone est obtenu par un processus à liaison croisée catalysée par du platine.

3. Panier pour cuisson vapeur selon la revendication 1 ou 2, **caractérisé en ce qu'**il comporte des moyens d'interconnexion pour permettre la formation de tas.

4. Panier pour cuisson vapeur selon l'une quelconque des revendications précédentes, **caractérisé en ce que** lesdits moyens de support ont une forme d'anneau ondulé.

5. Panier pour cuisson vapeur selon la revendication 4, **caractérisé en ce que** ledit conteneur (2) comporte une surface latérale (4), ladite surface latérale (4) et ledit anneau desdits moyens de support (6) ayant une forme frustoconique.

6. Panier pour cuisson vapeur selon l'une quelconque des revendications précédentes, **caractérisé en ce que** ledit fond (5) dudit conteneur (2) comporte des moyens de renforcement radiaux.

7. Panier pour cuisson vapeur selon l'une quelconque des revendications précédentes, **caractérisé en ce que** ledit fond (5) comporte deux poignées (8).

8. Panier pour cuisson vapeur selon la revendication 7, **caractérisé en ce que** lesdites poignées (8) sont dans le conteneur.

9. Utilisation d'un élastomère silicone ayant une dureté de 20 à 90 shore A pour fabriquer un panier pour cuisson vapeur selon la revendication 1.

10. Utilisation d'un élastomère comme revendiqué dans la revendication 9, **caractérisée en ce que** ledit élastomère silicone est obtenu par un processus à liaison croisée catalysée par du platine.
